# EUROPÄISCHE PATENTSCHRIFT

(11) **EP 0 739 389 B1**
(45) Veröffentlichungstag und Bekanntmachung des Hinweises auf die Patenterteilung: **20.05.1998**
(21) Anmeldenummer: 94926909.6
(22) Anmeldetag: 31.08.1994
(51) Int. Cl.: C09D 5/44

(54) **VEREINFACHTES VERFAHREN ZUR HERSTELLUNG EINER KORROSIONSSCHÜTZENDEN, GUT HAFTENDEN LACKIERUNG UND DIE DABEI ERHALTENEN WERKSTÜCKE**
SIMPLIFIED PROCESS FOR PRODUCING AN ANTICORROSIVE PAINT WITH A GOOD ADHESIVENESS AND WORKPIECES THUS OBTAINED
PROCEDE SIMPLIFIE D'APPLICATION D'UN VERNIS ANTI-CORROSION AYANT UNE BONNE ADHERENCE, ET PIECES AINSI OBTENUES

(30) Priorität: 04.09.1993 DE 4330002
(43) Veröffentlichungstag der Anmeldung: 30.10.1996
(73) Patentinhaber: Herberts Gesellschaft mit beschränkter Haftung, 42285 Wuppertal (DE)
(72) Erfinder: KERLIN, Klaus-Günter, D-42781 Haan (DE); HAMACHER, Peter, D-42283 Wuppertal (DE)
(74) Vertreter: Hrabal, Ulrich, Dr.
(86) Internationale Anmeldenummer: EP9402872
(87) Internationale Veröffentlichungsnummer: WO9507319

(56) Entgegenhaltungen:
- EP-A- 0 138 193
- EP-A- 0 509 437
- WO-A-86/04931
- FR-A- 2 449 135

## Beschreibung

Die Erfindung betrifft ein Verfahren zum Beschichten von metallischen Substraten mit einer Verringerung der notwendigen Verfahrensschritte, sowie die dabei erhaltenen Werkstücke.

Die Vorbehandlung metallischer Substrate für eine elektrophoretisch zu applizierende Tauchlackierung besteht, wenn ein hervorragender Korrosionsschutz erwünscht ist und eine gute Substrathaftung der durch elektrophoretische Abscheidung erzeugten Lackschicht erreicht werden soll, aus einer Phosphatierung und einer passivierenden Nachspülung. Auf diese Oberfläche wird dann der Elektrotauchlacküberzug appliziert und eingebrannt.

In der Automobilserienlackierung hat es sich beispielsweise durchgesetzt, daß die gereinigten Rohkarossen aus verzinktem oder unverzinktem Stahl zunächst phosphatiert und anschließend mit einer passivierenden Nachspülung versehen werden, bevor durch kathodische Abscheidung ein sogenannter kathodischer Tauchlack (KTL) als Grundierungsschicht aufgebracht wird (vgl. Glasurit-Handbuch der Lacke und Farben, S. 454 ff., 11. Auflage, 1984, Curt R. Vincentz Verlag Hannover). Dabei ist der Passivierungsschritt ein notwendiger Verfahrensbestandteil.

Dieses bis heute so betriebene, prinzipielle Verfahren ist in den vergangenen Jahren hinsichtlich der Zusammensetzung von Phosphatierungs- und Passivierungsmaterialien als auch des KTL-Materials ständig verbessert worden. Beispielsweise sind Phosphatierungs- und Passivierungsmaterialien hinsichtlich ihrer technologischen Eigenschaften als auch unter ökologischen Gesichtspunkten weiterentwickelt worden, wie Horst Gehmecker in JOT, Heft 5, 1992, S. 42 bis 46 beschreibt.

Als Phosphatierungsvarianten sind beispielsweise die Eisenphosphatierung, Zinkphosphatierung, Niedrigzinkphosphatierung, Trikationphosphatierung, mangandotierte Phosphatierung, nickelfreie Phosphatierung und die nitritfreie Phosphatierung bekannt geworden, wie die umfangreiche Patentliteratur belegt. Dabei haben sich Phosphatierungslösungen mit einem Gehalt an Nickelionen als besonders vorteilhaft erwiesen. Handelsprodukte für die Phosphatierung werden beispielsweise von der Firma Henkel unter dem Namen Granodine ^{R} vertrieben, z.B. Granodine 950 als Trikationsystem, Granodine 1990 als nitritfreies Trikationsystem oder Granodine 2700 als nickelfreies Trikationsystem.

Bei der Suche nach ökologisch und gesundheitlich unbedenklicheren Alternativen zu den ursprünglichen und auch heute noch gebräuchlichen Chromathaltigen Passivierungslösungen wurden Erfolge erzielt, wie z.B. die Patentliteratur beweist. Beispiele dafür sind Passivierungslösungen auf Zirkonfluorid- oder organischer Basis. So vertreibt beispielsweise die Firma Henkel Produkte für die Passivierung unter dem Namen Deoxylyte ^{R}, z.B. Deoxylyte 41 als Chromatsystem, Deoxylyte 54 NC als Zirkonfluoridsystem oder Deoxylyte 80 als System auf organischer Basis.

Ungeachtet der mit der vorstehend beschriebenen Arbeitsweise erreichbaren guten Eigenschaften bezüglich Substrathaftung und Korrosionsschutz besteht ein Nachteil in dem großen Platzbedarf der Vorbehandlungsanlagen. Außerdem fallen beim Einsatz der verschiedenen Vorbehandlungslösungen Abwässer in den Spülzonen an, die eine aufwendige Aufbereitung erfordern.

Elektrotauchlacke sind in großer Vielfalt bekannt. Sie enthalten im allgemeinen Vernetzungskatalysatoren, besonders in Form von Schwermetallverbindungen. In der Praxis haben insbesondere Blei- oder Zinnkatalysatoren Gebrauch gefunden. In neuerer Zeit sind auch bleifreie Elektrotauchlacke bekannt geworden, die jedoch hinsichtlich ihres Korrosionsschutzes verbesserungsbedürftig sind.

In der EP-A-138 193 wird die Verwendung von Salzen, speziell der Acetate, vorzugsweise zweiwertiger Metalle zur Verbesserung der Löslichkeit von Polymeren beschrieben. Als Metall wird unter anderem Wismut erwähnt. Verbesserte Lackfilmeigenschaften werden nicht beschrieben.

Aus der EP-A-0 509 437 sind über blockierte Isocyanatgruppen vernetzbare Elektrotauchlacke bekannt, die mindestens ein Didkylzinnsalz aromatischer Carbonsäuren und mindestens eine Wismut- oder Zirkonverbindung enthalten.

Aufgabe der Erfindung ist es, ein im Vergleich zum Stand der Technik vereinfachtes Verfahren zur Herstellung eines elektrophoretisch lackierten metallischen Substrats bereitzustellen, das einen hervorragenden Korrosionsschutz und eine ausgezeichnete Substrathaftung gewährleistet, und bei dem der Einsatz toxischer Hilfsmittel weitgehend vermieden werden kann.

Es hat sich gezeigt, daß diese Aufgabe überraschenderweise durch ein Verfahren zur Lackierung von metallischen Substraten durch Phosphatierungsbehandlung und elektrophoretische Tauchlackierung gelöst werden kann, das einen Gegenstand der Erfindung darstellt, und das dadurch gekennzeichnet ist, daß man
- das metallische Substrat einer Vorbehandlung durch Spritz- oder Tauchphosphatierung unterzieht und ohne Passivierungs-Nachbehandlung, gegebenenfalls nach einer Trocknung,
- eine elektrophoretische Tauchlackierung des so behandelten Metallsubstrats durchführt, wobei man einen Elektrotauchlack verwendet, der Wismutlactat und/oder Wismutdimethylolpropionat in einem Mengenanteil von 0,1 - 5 Gew.-% berechnet als Wismut und bezogen auf den Bindemittelfestkörper im Elektrotauchlack enthält und frei von Zinnverbindungen ist.

Wismutlactat und/oder Wismutdimethylolproprionat werden im folgenden als "organische Wismutverbindung" bezeichnet.

Charakteristisch an dem erfindungsgemäßen Verfahren ist, daß nach der Phosphatierungsvorbehandlung keine passivierende Nachbehandlung durchgeführt wird, und auch keine weiteren Nachbehandlungen notwendig sind.

Ferner betrifft die Erfindung die nach dem erfindungsgemäßen Verfahren hergestellten Substrate.

Als metallische Substrate können die in der Automobilindustrie üblichen Metallteile eingesetzt werden. Beispiele sind Bauteile aus Aluminium, Magnesium oder deren Legierungen und insbesondere Stahl, z.B. unverzinkt oder mit Reinzink, Zink-Nickel-Legierung oder Zink-Eisen-Legierung verzinkt. Die verschiedenen Substrate können gemeinschaftlich an einem Werkstück vorhanden sein (Gemischtbauweise).

Die im erfindungsgemäßen Verfahren einsetzbaren Phosphatierungslösungen sind an sich bekannt. Es können beispielsweise solche verwendet werden, wie sie Horst Gehmecker in JOT, Heft 5, 1992, S. 42 bis 46 beschreibt. Es handelt sich um Zink-, Mangan-, Eisen- und/oder Nickel-haltige Phosphatierungsmaterialien. Im Stand der Technik haben sich in der industriellen Praxis Phosphatierungslösungen mit einem Gehalt an Nickelionen als besonders vorteilhaft erwiesen. Im Rahmen der Erfindung hat es sich jedoch gezeigt, daß der Einsatz von toxischem Nickel vermieden werden kann, da er keine über die Verwendung der Wismut enthaltenden Elektrotauchlacke hinausgehenden Vorteile bringt. Die Phosphatierungsschichten können im Spritzoder im Tauchverfahren aufgebracht werden. Aus diesen Lösungen wird auf der Oberfläche des Metallsubstrats eine dünne Schicht an Phosphatkristallen abgeschieden. Diese soll möglichst dicht und feinkörnig sein. Erfindungsgemäß ist es nunmehr nicht notwendig eine weitere Nachbehandlung, wie eine Passivierungsbehandlung, durchzuführen. Hierdurch ergeben sich überraschende Vorteile zum Stand der Technik, bei dem nach der Ausbildung der Phosphatschicht eine Passivierung notwendig war, um einen guten Korrosionsschutz zu erhalten. Es mußten Passivierungslösungen eingesetzt werden, die im allgemeinen giftige Chromverbindungen enthielten. Erfindungsgemäß ist es auch möglich die in neuerer Zeit angebotenen chromfreien Passivierungslösungen zu vermeiden.

Erfindungsgemäß kann das Substrat nach dem Phosphatieren beispielsweise getrocknet und der nachfolgenden Elektrotauchlackierung zugeführt werden.

Als Elektrotauchlacke können beim erfindungsgemäßen Verfahren an sich bekannte, an der Anode abscheidbare Elektrotauchlacke oder bevorzugt kathodisch abscheidbare Elektrotauchlacke, die die erfindungsgemäßen Anteile an organischen Wismutverbindungen enthalten, verwendet werden. Sie unterliegen keiner Beschränkung. Sie können die üblichen Additive und Katalysatoren enthalten. Eine bevorzugte Ausführungsform ist jedoch frei von Chrom- und/oder Bleiverbindungen. Es sollen umwelt- oder gesundheitsgefährdende Metallverbindungen vermieden werden.

Die im erfindungsgemäßen Verfahren einsetzbaren Elektrotauchlacke sind wäßrige Überzugsmittel mit einem Festkörper von beispielsweise 10 - 20 Gew.-%. Dieser besteht aus üblichen Bindemitteln, die ionische oder in ionische Gruppen überführbare Substituenten sowie zur chemischen Vernetzung fähige Gruppen tragen, sowie gegebenenfalls Pigmenten und/oder Füllstoffen und weiteren Additiven. Die ionischen Gruppen können anionische oder in anionische Gruppen überführbare Gruppen, z.B. -COOH-Gruppen oder kationische oder in kationische Gruppe überführbare basische Gruppen, z.B. Amino-, Ammonium-, z.B. quartäre Ammonium-, Phosphonium-und/oder Sulfonium-Gruppen sein. Bevorzugt sind Bindemittel mit basischen Gruppen. Besonders bevorzugt sind stickstoffhaltige basische Gruppen. Diese Gruppen können quarternisiert vorliegen oder sie werden mit einem üblichen Neutralisationsmittel, z.B. einer organischen Monocarbonsäure, wie z.B. Milchsäure, Ameisensäure, Essigsäure, wie dem Fachmann geläufig, in ionische Gruppen überführt.

Beispiele für erfindungsgemäß einsetzbare anionische Gruppen enthaltende anodisch abscheidbare Elektrotauchlack-Bindemittel und Lacke (ATL) sind in der DE-A-28 24 418 beschrieben. Es handelt sich beispielsweise um Bindemittel auf Basis von Polyestern, Epoxidharzestern, Poly(meth)acrylaten, Maleinatölen oder Polybutadienölen mit einem Gewichtsmittel der Molmasse von beispielsweise 300 - 10000 und einer Säurezahl von 35 - 300 mg KOH/g. Die Bindemittel tragen -COOH, -SO₃H und/oder PO₃H₂-Gruppen. Die Harze können nach Neutralisation von mindestens einem Teil der sauren Gruppen in die Wasserphase überführt werden. Die Lacke können auch übliche Vernetzer enthalten, z.B. Triazinharze, Vernetzer, die umesterungs- und/oder umamidierungsfähige Gruppen enthalten oder blockierte Polyisocyanate.

Bevorzugt sind jedoch kathodische Elektrotauchlacke (KTL) auf Basis kationischer bzw. basischer Bindemittel. Solche basischen Harze sind beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (M_{w}) der Basisharze liegt bevorzugt bei 300 bis 10000. Beispiele für solche Basisharze sind Aminoacrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige und/oder umamidierungsfähige Gruppen enthalten.

Beispiele für in kathodischen Tauchlack (KTL)-Bädern eingesetzte Basisharze und Vernetzer, die erfindungsgemäß verwendet werden können, sind in der EP-A-082 291, EP-A-234 395, EP-A-209 857, EP-A-227 975, EP-A-178 531, EP-A-333 327, EP-A-310 971, EP-A-456 270, US 3 922 253, EP-A-261 385, EP-A-245 786, DE-33 24 211, EP-A-414 199, EP-A-476 514 beschrieben. Diese Harze können allein oder im Gemisch eingesetzt werden.

Im erfindungsgemäßen Verfahren hat sich der Einsatz von KTL-Bädern gemäß EP-A-414 199 und solcher auf Basis von Bindemitteln gemäß EP-A-234 395 besonders bewährt.

Erfindungsgemäß können das Wismutlactat und/oder Wismutdimethylolpropionat besonders bevorzugt in kathodisch abscheidbare Elektrotauchlacke eingearbeitet werden.

Der Mengenanteil der organischen Wismutverbindung im erfindungsgemäß eingesetzten Elektrotauchlack beträgt 0,1 bis 5 Gew.-%, bevorzugt 0,5 bis 3,0 Gew.-%, berechnet als Wismut und bezogen auf den Bindemittelfestkörper des Elektrotauchlackbades. Dabei ist darauf zu achten, daß die Menge der gegebenenfalls eingebrachten Carboxylationen nicht die Eigenschaften des Elektrotauchlacks negativ beeinflußt. Die organische Wismutverbindung kann in dem im erfindungsgemäßen Verfahren einsetzbaren Elektrotauchlack in der wäßrigen oder in der dispersen Phase gelöst, feinverteilt, z.B. in kolloidaler Form, oder als vermahlenes Pulver vorliegen. Bevorzugt soll sie eine zumindest anteilige Wasserlöslichkeit besitzen.

Verfahrenstechnisch ist der Prozeß der Elektrotauchlackierung im allgemeinen mit einem Ultrafiltrationsprozeß gekoppelt. Dabei gehen wasserlösliche Bestandteile aus dem Elektrotauchlack durch eine Membran in das Ultrafiltrat über. Das erfindungsgemäße Verfahren kann unter Verwendung membrangängiger organischer Wismutverbindungen durchgeführt werden. Bevorzugt werden die organischen Wismutverbindungen so ausgewählt, daß bei den in den Elektrotauchlackbädern herrschenden pH-Werten nur eine geringe Membrangängigkeit vorliegt, d.h. das Ultrafiltrat sollte beim erfindungsgemäßen Verfahren im wesentlichen frei von Wismutverbindungen sein. Eine Verminderung des Wismutgehaltes im Elektrotauchlackbad kann auf diesem Wege vermieden werden.

Die Einarbeitung der organischen Wismutverbindungen in den Elektrotauchlack kann auf verschiedene Weise erfolgen. Beispielsweise kann die organische Wismutverbindung vor Zugabe wesentlicher Mengen von Wasser als Verdünnungsmittel der neutralisierten Bindemittellösung bei erhöhter Temperatur zugegeben und anschließend unter Rühren homogenisiert werden. Im Falle von durch Säuren neutralisierten Bindemitteln kann die organische Wismutverbindung beispielsweise bei 60 bis 80°C portionsweise zugegeben und anschließend unter Rühren bei 60 bis 100°C, vorzugsweise bei 60 bis 70°C, mehrere Stunden, vorzugsweise 4 bis 8 Stunden homogenisiert werden. Bei Verwendung von Milchsäure oder Dimethylolpropionsäure, als Neutralisationsmittel für die Bindemittel kann alternativ auch mit den entsprechenden Mengen an Wismutoxid oder -hydroxid gearbeitet werden, wobei das entsprechende Wismutsalz in situ gebildet wird. Dabei ist die Säuremenge gegenüber-dem erstgenannten Verfahren um den zur Salzbildung notwendigen Anteil anzupassen.

Weiterhin ist die Einarbeitung der organischen Wismutverbindungen in den Elektrotauchlack z.B. auch als Bestandteil von üblichen Pigmentpasten möglich. Ebenso können die organischen Wismutverbindungen, wenn sie wasserlöslich sind bzw. in einem Lösungsvermittler gelöst vorliegen, der Bindemitteldispersion oder dem Elektrotauchlack nachträglich zugesetzt werden. Es ist jedoch darauf zu achten, daß eine gleichmäßige Verteilung im Elektrotauchlackbad vorliegt.

Zusätzlich zu den Basisharzen und gegebenenfalls vorhandenem Vernetzer sowie dem erfindungswesentlichen Anteil an organischen Wismutverbindungen kann das Elektrotauchlack (ETL)-Überzugsmittel Pigmente, Füllstoffe und/oder lackübliche Additive enthalten. Als Pigmente kommen die üblichen anorganischen und/oder organischen Pigmente in Frage. Beispiele sind Ruß, Titandioxid, Eisenoxid, Kaolin, Talkum oder Siliciumdioxid. Es ist auch möglich, übliche Korrosionsschutzpigmente zu verwenden. Beispiele dafür sind Zinkphosphat, Bleisilikat oder organische Korrosionsinhibitoren. Die Art und Menge der Pigmente richtet sich nach dem Verwendungszweck der Überzugsmittel. Sollen klare Überzüge erhalten werden, so werden keine oder nur transparente Pigmente, wie z.B. mikronisiertes Titandioxid oder Siliciumdioxid eingesetzt. Sollen deckende Überzüge appliziert werden, so sind bevorzugt farbgebende Pigmente im Elektrotauchlackbad enthalten.

Die Pigmente können zu Pigmentpasten dispergiert werden, z.B. unter Verwendung von bekannten Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Als Additive sind die üblichen Additive für ETL-Überzugsmittel möglich. Beispiele dafür sind Netzmittel, Neutralisationsmittel, Verlaufsmittel, Katalysatoren, Antischaummittel sowie übliche in Überzugsmitteln verwendete Lösemittel.

Beim erfindungsgemäßen Verfahren wird das metallische Substrat gereinigt und danach einer Phosphatierungsvorbehandlung unterzogen. Eine passivierende Nachbehandlung wird nicht durchgeführt. Derartige phosphatierte, nicht-passivierte Bleche für Versuchszwecke sind handelsüblich und werden z.B. von der Firma Chemetall unter dem Namen Bonder^{R} 26/W/0C (nickelhaltige Phosphatierung) oder Bonder^{R} 2640/W/0C (nickelfreie Phosphatierung) vertrieben.

Das phosphatierte Substrat kann danach getrocknet werden, oder es wird direkt der Elektrotauchlackierung unterzogen. Nach der Beschichtung mit dem wismuthaltigen Elektrotauchlack wird der Überzug durch Einbrennen vernetzt. Bei Verwendung der erfindungsgemäß aufgebrachten Lackierung als Grundierung, können Folgeschichten aufgebracht werden.

Man erhält nach dem erfindungsgemäßen Verfahren eine Lackschicht mit ausgezeichneter Haftung zum Untergrund und hervorragendem Korrosionsschutz. Dabei können sowohl Phosphatierungsmittel als auch Elektrotauchlack frei von umweltgefährdenden Metallverbindungen, wie Chrom-, Blei-, Nickel- oder Zinnverbindungen sein.

Das erfindungsgemäße Verfahren ist gegenüber dem eingangs genannten Stand der Technik wesentlich vereinfacht, da ein kompletter Verfahrensschritt, nämlich die Passivierungsbehandlung, eingespart werden kann, ohne technologische Nachteile in Kauf nehmen zu müssen.

### Beispiel 1 (Herstellung von organischen Wismutsalzen)

Deionisiertes Wasser und Säure werden vorgelegt und auf 70°C erwärmt. Unter Rühren wird handelsübliches Wismutoxid (Bi₂O₃) portionsweise zugegeben. Nach weiteren 6 Stunden Rühren bei 70°C wird der Ansatz auf ca. 20°C gekühlt und 12 Stunden ohne Rühren belassen. Schließlich wird der Niederschlag abfiltriert, mit wenig Wasser und Ethanol gewaschen und bei einer Temperatur von 40 - 60°C getrocknet.

Folgende Salze werden unter Verwendung der angegebenen Mengenanteile hergestellt:

| | |
|---|---|
| Wismutlactat | 466 Teile (1 Mol) Wismutoxid + 901 Teile (7 Mol) Milchsäure 70 % in Wasser |
| Wismutdimethylolpropionat | 466 Teile (1 Mol) Wismutoxid + 938 Teile (7 Mol) Dimethylolpropionsäure + 2154 Teile Wasser |

### Beispiel 2 (Herstellung eines wismuthaltigen Elektrotauchlacks):

a) 570 g eines Epoxidharzes auf Basis von Bisphenol A (Epoxidäquivalent 190) und 317 g Methoxypropanol werden auf 60°C erwärmt, innerhalb von 2 Stunden mit einer Mischung aus 116 g Ethylhexylamin und 163 g eines polymeren Amins (siehe unten) versetzt und bis zu einem MEQ-Wert von 2,06 reagiert. Anschließend werden 1330 g einer 75 %igen Lösung eines Bisphenol A-Epoxidharzes (Epoxidäquivalent 475) in Methoxypropanol zugegebene. In der Folge wird bei 60°C innerhalb einer Stunde eine Lösung von 189 g Diethanolamin in 176 g Methoxypropanol zugegeben und die Reaktion bis zu einem MEQ-Wert von 1,57 geführt. Nach weiterer Zugabe einer Lösung von 78 g Diethylaminopropylamin in 54 g Methoxypropanol innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARDNER-HOLD; 6 g Harz + 4 g Methoxypropanol) von I - J wird mit Methoxypropanol auf einen Feststoffgehalt von 65 Gew.-% verdünnt. Das Produkt hat eine Aminzahl von 117 mg KOH/g und eine Hydroxylzahl von 323 mg KOH/g, jeweils auf den Feststoff bezogen.
   Das polymere Amin wird durch Umsetzung von 1 Mol Diethylentriamin mit 3,1 Mol 2-Ethylhexylglycidylether und 0,5 Mol eines Bisphenol A-Epoxidharzes (Epoxidäquivalent 190) in 80 %iger Methoxypropanol-Lösung hergestellt. Das Produkt weist eine Viskosität (DIN 53 211/ 20°C; 100 g Harz + 30 g Methoxypropanol von 60 bis 80 Sekunden auf.
b) 134 g Trimethylolpropan werden mit 160 g Malonsäurediethylester versetzt und bis zum Destillationsbeginn (ca. 140 - 150°C) erhitzt. Bei steigender Temperatur (bis 180°C) werden 46 g Ethanol abdestilliert. Nach beendeter Reaktion wird mit 128 g Diethylenglykoldimethylether verdünnt und auf 60°C gekühlt. Anschließend werden 264 g eines Reaktionsproduktes aus 1 Mol Toluylendiisocyanat und 1 Mol Ethylenglykolmonoethylether innerhalb von 4 Stunden zugegeben und bei 60°C auf einen NCO-Gehalt unter 0,02 Milliäquivalent pro g Probe reagiert.
   Das erhaltene Produkt hat einen Feststoffgehalt von 80 ± 2 Gew.-% (30 Minuten, 120°C), eine Viskosität nach GARDNER - HOLD (10 g Produkt + 2 g Diethylenglykoldimethylether) von K und einen Brechungsindex n 20/d von 1,4960.
c) Die unter a) und b) erhaltenen Produkte werden im Verhältnis 70 : 30 (bezogen auf Feststoffgehalt) gemischt. Anschließend wird Milchsäure zugegeben, wobei deren zur Erreichung einwandfreier Wasserlöslichkeit erforderliche Menge in Vorversuchen ermittelt wurde. Es wird auf 70°C erhitzt und innerhalb von zwei Stunden Wismutdimethylolpropionat unter Rühren portionsweise in einer solchen Menge zugegeben, daß 1,5 Gew.-% Wismut, bezogen auf Feststoffgehalt, im Ansatz vorhanden sind. Anschließend wird noch 6 Stunden bei 60 - 70°C gerührt und zuletzt mit Methoxypropanol auf einen Feststoffgehalt von 65 Gew.-% verdünnt.
d) Entsprechend der Formulierung 100 Teile Bindemittel, 39,5 Teile Titandioxid und 0,5 Teile Ruß wird ein kathodisch abscheidbarer Elektrotauchlack mit 18 Gew.-% Feststoffgehalt in üblicher Weise hergestellt.

### Beispiel 3 (Herstellung von KTL-Dispersionen)

a) 832 Teile des Monocarbonats eines Epoxidharzes auf der Basis von Bisphenol A (Handelsprodukt Epicote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht bis eine Epoxidzahl von 0 erreicht wird. Zu diesem Produkt (Festkörper 70 %, 2 Äquivalente Carbonat) werden bei 40 bis 80°C in Gegenwart von 0,3 % Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol unter Zugabe von 0,3 % Benzyltrimethylammoniumhydroxid (Triton B) mit einem NCO-Gehalt von ca. 12,8 % gegeben. Es wird bis zu einem NCO-Wert von ca. 0 umgesetzt und dann mit Diglykoldimethylether auf ca. 70 % Festkörper eingestellt.
b) Zu 1759 Teilen eines Biscarbonats eines Epoxidharzes auf der Basis von Bisphenol A (Handelsprodukt Epicote 1001 ^{(R)}) werden bei 60 bis 80°C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol unter Zugabe von 0,3 % Benzyltrimethylammoniumhydroxid als Katalysator mit einem Rest-NCO-Gehalt von 12,8 % langsam zugegeben unter Katalyse von 0,3 % eines nicht-ionischen Emulgators (Triton B^{(R)}). Die Reaktion wird bis zu einem NCO-Wert von ca. 0 fortgesetzt. Das Produkt hat einen Feststoffgehalt von 70 %. Zu 860 Teilen Bis-hexamethylentriamin in 2315 Teilen Methoxypropanol gelöst werden bei einer Temperatur von 20 bis 40°C 622 Teile des Umsetzungsproduktes aus 137 Teilen 2-Ethylhexanol mit 174 Teilen Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert.
c1) Es wird mit 30 mmol Ameisensäure/100 g Harz neutralisiert. Danach wird auf 70°C erhitzt und innerhalb von zwei Stunden Wismutlactat unter Rühren portionsweise in einer solchen Menge zugegeben, daß 1,5 Gew.-% Wismut, bezogen auf Feststoffgehalt im Ansatz vorhanden sind. Anschließend wird noch 6 Stunden bei 60 bis 70°C gerührt. Nach Abkühlen wird mit deionisiertem Wasser in eine Dispersion mit einem Festkörper von 40 Gew.-% überführt.
c2) c1) wird wiederholt mit dem Unterschied, daß nach Zugabe der Ameisensäure kein Erhitzen und keine Zugabe von Wismutsalz erfolgt.

### Herstellung von Pigmentpasten

### Beispiel 4

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 374 Teile deionisiertes Wasser gegeben.

Dazu werden 5 Teile Ruß, 5 Teile pyrogene Kieselsäure, 25 Teile Dibutylzinnoxidpulver, 38 Teile Bleisilikat und 560 Teile Titandioxid gegeben. Mit deionisiertem Wasser wird auf ca. 50 % Festkörper eingestellt und auf einer Perlmühle vermahlen. Es entsteht eine stabile Pigmentpaste.

### Beispiel 5

Beispiel 4 wird wiederholt ohne Zusatz von Bleisilikat.

### Beispiel 6

Beispiel 5 wird wiederholt ohne Zusatz von Dibutylzinnoxid.

### Beispiel 7 (Herstellung eines wismuthaltigen KTL)

Zu 815,5 Teilen der Dispersion aus Beispiel 3 c1) werden 4,5 Teile Ameisensäure (50 %) und 1760 Teile deionisiertes Wasser gegeben. Unter gutem Rühren werden 420 Teile Pigmentpaste nach Beispiel 6 zugesetzt.

### Beispiel 8 (Herstellung eines blei- und zinnhaltigen KTL)

Zu 815,5 Teilen der Dispersion aus Beispiel 3 c2) werden 4,5 Teile Ameisensäure (50 %) und 1760 Teile deionisiertes Wasser gegeben. Unter gutem Rühren werden 420 Teile Pigmentpaste nach Beispiel 4 zugesetzt.

### Beispiel 9 (Herstellung eines zinnhaltigen KTL)

Beispiel 8 wird wiederholt mit dem Unterschied, daß 420 Teile der Pigmentpaste aus Beispiel 5 eingesetzt werden.

### Beispiel 10 (Herstellung eines blei- und zinnhaltigen KTL)

Gemäß EP-0 414 199-A2, Tabelle 3, Bindemittelkombination 2 wird ein pigmentierter Kataphoreselack mit einem Festkörpergehalt von 18 Gew.-% hergestellt.

### Beispiel 11 (Herstellung eines zinnhaltigen KTL)

Beispiel 10 wird wiederholt ohne Zusatz von basischem Bleisilikat. Dabei enthält der Kataphoreselack 0,5 Teile Ruß, 35,5 Teile Titandioxid, 5 Teile Hexylglykol, jeweils bezogen auf Festharz.

### Beispiel 12 (Herstellung eines wismuthaltigen KTL)

Beispiel 11 wird wiederholt mit dem Unterschied, daß vor Zusatz der Pigmente und Verdünnen mit deionisiertem Wasser auf einen Festkörper von 18 Gew.-% auf 70°C erhitzt wird und innerhalb von zwei Stunden Wismutlactat unter Rühren portionsweise in einer solchen Menge zugegeben wird, daß 1,5 Gew.-% Wismut, bezogen auf Feststoffgehalt, im Ansatz vorhanden sind.

Die Lacke aus Beispiel 2 und 7 bis 12 werden durch kathodische Abscheidung auf einseitig elektrolytisch verzinkte Stahlbleche (ST 1405) mit jeweils unterschiedlicher Vorbehandlung (zu Versuchszwecken von der Firma Chemetall vertriebene sogenannte "Bonder"-Bleche, vgl. nachstehende Auflistung) in 20 µm Trockenschichtdicke appliziert und 10 min. bei 175°C (Objekttemperatur) eingebrannt. Nach halbseitigem Abkleben der nicht-verzinkten Seite wird ein handelsüblicher Füller in 35 µm Trockenschichtdicke beidseitig aufgespritzt und 15 min. bei 165°C (Objekttemperatur) eingebrannt. Danach wird beidseitig ein für die Automobilserienlackierung geeigneter Einschichtdecklack durch Spritzen in 40 µm Trockenschichtdicke aufgetragen und 30 min. bei 130°C (Objekttemperatur) eingebrannt. Danach wird die Abklebung entfernt.

Auflistung der unterschiedlichen Vorbehandlungen:
- A Bonder^{R} 26/60/0C: (Nickelhaltige Trikationspritzphosphatierung, chromsäurepassiviert)
- B Bonder^{R} 26/D6800/OC: (Nickelhaltige Trikationspritzphosphatierung, passiviert mit Zirkonfluorid)
- C Bonder^{R} 2640/60/0C: (Nickelfreie Trikationtauchphosphatierung, chromsäurepassiviert)
- D Bonder^{R} 26/W/0C: (Nickelhaltige Trikationspritzphosphatierung, ohne Passivierung, wassergespült)
- E Bonder^{R} 2640/W/OC: (Nickelfreie Trikationtauchphosphatierung, ohne Passivierung, wassergespült)

Durchgeführte Prüfungen:
1. Prüfung des Korrosionsschutzes nach VDA-Richtlinie 621-415 auf der nicht-verzinkten Seite, Prüfdauer 10 Zyklen. Angabe der Unterwanderung nach DIN 53 167 in mm (vgl. Tabelle 1).
2. Prüfung der Haftung am Serienaufbau auf der verzinkten Seite nach DIN 53 151 vor und nach Belastung mit 240 Stunden Konstantklima nach DIN 50 017 (vgl. Tabelle 2).

**Tabelle 1**

| **Korrosionsschutzprüfung, Angaben in mm** | | | | | |
|---|---|---|---|---|---|
| | A | B | C | D | E |
| Lackbeispiel | | | | | |
| 2 | 1,3 | 1,3 | 1,3 | 1,4* | 1,3* |
| 7 | 1,2 | 1,2 | 1,2 | 1,4* | 1,3* |
| 8 | 1,3 | 1,3 | 1,3 | 3,5 | 1,9 |
| 9 | 1,2 | 1,3 | 1,2 | 3,8 | 2,1 |
| 10 | 1,1 | 1,1 | 1,1 | 2,3 | 1,8 |
| 11 | 1,4 | 1,4 | 1,4 | 3,3 | 2,4 |
| 12 | 1,1 | 1,3 | 1,2 | 1,3* | 1,3* |

**Tabelle 2**

| **Prüfung der Haftung durch Gitterschnitt vor (v) und nach (n) Belastung im Konstantklima** | | | | | | | | | | |
|---|---|---|---|---|---|---|---|---|---|---|
| | A | | B | | C | | D | | E | |
| | v | n | v | n | v | n | v | n | v | n |
| Lackbeispiel | | | | | | | | | | |
| 2 | 1 | 1 | 1 | 1 | 1 | 1 | 1* | 1* | 1* | 1* |
| 7 | 1 | 1 | 1 | 1 | 1 | 1 | 1* | 1* | 1* | 1* |
| 8 | 1 | 1 | 1 | 1 | 1 | 1 | 1 2 | | 1 | 3 |
| 9 | 1 | 1 | 1 | 1 | 1 | 1 | | 2 | 1 | 2 |
| 10 | 1 1 | | 1 | 1 | 1 | 1 | 1 2 | | 1 2 | |
| 11 | 1 | 1 | 1 | 1 | 1 | 1 | 1 | 2 | 1 | 2 |
| 12 | 1 | 1 | 1 | 1 | 1 | 1 | 1* | 1* | 1* | 1* |

Die in Tabelle 1 und 2 mit ∗ gekennzeichneten Werte bezeichnen die Ergebnisse, die mit dem erfindungsgemäßen Verfahren erzielt werden.

## Patentansprüche

1. Verfahren zur Lackierung von metallischen Substraten durch Phosphatierungsbehandlung und elektrophoretische Tauchlackierung, dadurch gekennzeichnet, daß man
- das metallische Substrat einer Vorbehandlung durch Spritz- oder Tauchphosphatisierung unterzieht und ohne Passivierungs-Nachbehandlung, gegebenenfalls nach einer Trocknung,
- eine elektrophoretische Tauchlackierung des so behandelten Metallsubstrats durchführt, wobei man einen Elektrotauchlack verwendet, der Wismutlactat und/oder Wismutdimethylolpropionat in einem Mengenanteil von 0,1 - 5 Gew.-% berechnet als Wismut und bezogen auf den Bindemittelfestkörper im Elektrotauchlack enthält und frei von Zinnverbindungen ist.

2. Verfahren nach Anspruch 1, dadurch gekennzeichnet, daß man die Phosphatierung mit einer Phosphatierungslösung durchführt, die frei von Nickelionen ist.

3. Verfahren nach Anspruch 1 oder 2, dadurch gekennzeichnet, daß man die elektrophoretische Tauchlackierung mti einem kathodischen Elektrotauchlack auf der Basis von selbstvernetzenden oder fremdvernetzenden Bindemitteln mit primären, sekundären und/oder tertiären Aminogruppen, entsprechend einer Aminzahl von 20 bis 250 mg KOH/g und einem Gewichtsmittel der Molmasse (Mw) von 300 bis 10000, deren Aminogruppen zumindest teilweise quarternisiert und/oder neutralisiert vorliegen, durchgeführt.

4. Verfahren nach einem der vorhergehenden Ansprüche, dadurch gekennzeichnet, daß es zur Lackierung von Kraftfahrzeugkarosserien und deren Teilen verwendet wird.

5. Verfahren nach einem der vorhergehenden Ansprüche, dadurch gekennzeichnet, daß es zur Grundierung von Kraftfahrzeugkarosserien und deren Teilen innerhalb einer Mehrschichtlackierung verwendet wird.

6. Verfahren nach einem der vorhergehenden Ansprüche, dadurch gekennzeichnet, daß es zur Lackierung von Metallsubstraten verwendet wird, die aus verschiedenen Metallen zusammengesetzt sind.

7. Metallsubstrate in der Form von metallischen Werkstücken, die nach dem Verfahren eines der Ansprüche 1 bis 6 behandelt wurden.

## Claims

1. A process for coating metal substrates by phosphating treatment and electrophoretic dip coating,
characterised in that
- the metallic substrate is subjected to a preliminary treatment by spray-phosphating or dip-phosphating and without passivating aftertreatment, optionally after drying,
- an electrophoretic dip coating of the metal substrate thus treated is carried out, an electrophoretic coating being used which contains bismuth lactate and/or bismuth dimethylolpropionate in a quantity of from 0.1 to 5 wt.%, calculated as bismuth and based on the binder solid content in the electrophoretic coating, and which is free from tin compounds.

2. A process according to claim 1, characterised in that the phosphating is carried out using a phosphating solution which is free from nickel ions.

3. A process according to claim 1 or 2, characterised in that the electrophoretic dip coating is carried out using a cathodic electrophoretic coating based on binders which cross-link naturally or in the presence of cross-linking agents and contain primary, secondary and/or tertiary amino groups, corresponding to an amine value of from 20 to 250 mg KOH/g and to a weight average molar mass (Mw) of from 300 to 10000, the amino groups of which are at least partly quaternised and/or neutralised.

4. A process according to one of the preceding claims, characterised in that it is used for lacquering car bodies and parts thereof.

5. A process according to one of the preceding claims, characterised in that it is used for priming car bodies and parts thereof within a multilayer lacquering process.

6. A process according to one of the preceding claims, characterised in that it is used for coating metal substrates which are composed of different metals.

7. Metal substrates in the form of metallic workpieces, which have been treated by the process according to one of claims 1 to 6.

## Revendications

1. Procédé pour appliquer une peinture sur des substrats métalliques au moyen d'un traitement de phosphatation et d'une application de peinture électrophorétique par immersion, caractérisé en ce que
- on soumet le substrat métallique à un traitement préalable au moyen d'une phosphatation par projection ou par immersion et, sans traitement ultérieur de passivation, éventuellement après un séchage,
- on applique une peinture électrophorétique par immersion au substrat métallique ainsi traité en utilisant une peinture électrophorétique, qui contient du lactate de bismuth et/ou du diméthylpropionate de bismuth en une quantité de 0,1 - 5 % en poids de bismuth, rapportés au corps solide du liant dans la peinture électrophorétique, et est exempte de composés d'étain.

2. Procédé selon la revendication 1, caractérisé en ce qu'on exécute la phosphatation avec une solution de phosphatation qui ne contient pas d'ions nickel.

3. Procédé selon la revendication 1 ou 2, caractérisé en ce qu'on exécute le revêtement électrophorétique par immersion en utilisant une peinture électrophorétique cathodique à base de liants auto-réticulants ou de liants réticulant sous l'effet d'une action extérieure et comportant des groupes amino primaires, secondaires et/ou tertiaires, correspondant à un indice d'amine de 20 à 250 mg de KOH/g et une moyenne pondérale de la masse molaire (Mw) comprise entre 300 et 10000, dont les groupes amino sont présents à l'état au moins partiellement quaternisé et/ou neutralisé.

4. Procédé selon l'une des revendications précédentes, caractérisé en ce qu'on l'utilise pour l'application de peinture sur des carrosseries de véhicules automobiles ou sur leurs pièces.

5. Procédé selon l'une quelconque des revendications précédentes, caractérisé en ce qu'on l'utilise pour l'application d'une couche de fond sur des carrosseries de véhicules automobiles et leurs pièces dans le cadre d'une application de peinture à couches multiples.

6. Procédé selon l'une des revendications précédentes, caractérisé en ce qu'on l'utilise pour appliquer une peinture à des substrats métalliques, qui sont composés de différents métaux.

7. Substrat métallique sous la forme de pièces métalliques qui ont été traitées selon le procédé selon l'une des revendications 1 à 6.
